# EUROPEAN PATENT APPLICATION

(11) **EP 3 751 502 A1**
(43) Date of publication of application: **16.12.2020**
(21) Application number: 19751763.4
(22) Date of filing: 06.02.2019
(51) Int. Cl.: G06Q 50/10

(54) **MINIATURE FACILITY OPERATION METHOD, MINIATURE FACILITY CONTROL DEVICE, MINIATURE FACILITY CONTROL PROGRAM, MINIATURE FACILITY REMOTE CONTROL PROGRAM, MINIATURE FACILITY CONTROL SYSTEM, AND MINIATURE FACILITY CONSTRUCTION METHOD**

(30) Priority: 09.02.2018 JP 2018022442
(71) Applicant: Small Worlds Inc., Tokyo 105-0001 (JP)
(72) Inventor: KONDO, Masahiro, Tokyo 105-0001 (JP)
(74) Representative: Cabinet Beaumont
(86) International application number: PCT/JP2019/004181
(87) International publication number: WO 2019/156104

(57) **Abstract**

Provided are a miniature facility operation method and the like, which make it possible to operate a miniature associated with a visiting user.

In the miniature facility operation method: a component of a miniature facility which simulates the real world in a real space or expresses a virtual world in the real space and which builds a pseudo-space is presented; purchase of component use rights is accepted; identification information of a user that purchased the use rights is stored in a storage unit in association with the component ID of the purchased component; and when the identification information is read by a reader of the miniature facility, the component ID associated with the read user identification information is acquired from the storage unit, and the component to which the acquired component ID was assigned is operated.

## Description

### [Technical Field]

The present invention relates to a miniature facility operation method and the like.

### [Background Art]

In recent years, with the progress of a model technique, models of architectural structures that are as realistic as real houses and office buildings have been proposed (for example, Patent Document 1).

On the other hand, it has been proposed to operate digital models assembled by users in virtual spaces such as game spaces (for example, Patent Document 2).

### [Prior Art Documents]

### [Patent Documents]

[Patent Document 1] Japanese Patent Application Laid-Open No. 2012-8388
[Patent Document 2] Japanese Patent Application Laid-Open No. 2002-200361

### [Summary of Invention]

### [Problems to be Solved by Invention]

However, it has never been performed to operate miniatures associated with visiting users in a miniature facility where a plurality of miniatures is collected.

The present invention is made in view of such circumstances. An object thereof is to provide a miniature facility operation method and the like capable of operating miniatures associated with visiting users.

### [Means for Solving Problems]

The miniature facility operation method according to the present invention is characterized by an operation method comprising; presenting a component of a miniature facility where a pseudo space simulating a real world in real space or expressing a virtual world in the real space is constructed; accepting purchase of a use authority of the component; storing identification information of a user who purchased the use authority and a component ID of the purchased component in a storage portion in association with each other; when the identification information of the user is read by a reader of the miniature facility, obtaining the component ID associated with the read identification information of the user from the storage portion; and operating the component assigned with the obtained component ID.

### [Effect of the Invention]

In the present invention, in a miniature facility, it is made possible to operate miniatures associated with visiting users.

### [Brief Description of Drawings]

Fig. 1 is an explanatory view showing a structure example of a miniature facility system;
Fig. 2 is a block diagram showing a hardware structure example of the control server;
Fig. 3 is a block diagram showing a hardware structure example of the user terminal;
Fig. 4 is an explanatory view showing an example of the user DB;
Fig. 5 is an explanatory view showing an example of the area DB;
Fig. 6 is an explanatory view showing an example of the component DB;
Fig. 7 is an explanatory view showing an example of the building DB;
Fig. 8 is an explanatory view showing an example of the room arrangement DB;
Fig. 9 is an explanatory view showing an example of the mobile object DB;
Fig. 10 is an explanatory view showing an example of the common component DB;
Fig. 11 is an explanatory view showing an example of the special component DB;
Fig. 12 is a flowchart showing a procedure example of building use authority purchase processing;
Fig. 13 is a flowchart showing a procedure example of visiting operation processing;
Fig. 14 is a flowchart showing a procedure example of visiting prompting processing;
Fig. 15 is a flowchart showing another procedure example of the visiting operation processing;
Fig. 16 is a flowchart showing a procedure example of remote operation processing;
Fig. 17 is a flowchart showing another procedure example of the visiting operation processing;
Fig. 18 is a plan view showing an example of the product sales area;
Fig. 19 is an explanatory view showing an example of a section owner DB;
Fig. 20 is an explanatory view showing an example of an authority DB;
Fig. 21 is an explanatory view showing an example of a resident DB;
Fig. 22 is an explanatory view showing an example of a product DB;
Fig. 23 is an explanatory view showing an example of an advertisement DB;
Fig. 24 is a flowchart showing a procedure example of section owner registration processing;
Fig. 25 is a flowchart showing a procedure example of product registration processing;
Fig. 26 is a flowchart showing a procedure example of advertisement delivery processing;
Fig. 27 is a flowchart showing a procedure example of resident registration processing;
Fig. 28 is an explanatory view showing an example of a brokerage DB;
Fig. 29 is a flowchart showing a procedure example of tenant setting processing;
Fig. 30 is a flowchart showing a procedure example of the visiting operation processing.

### [Mode for Carrying out Invention]

Hereinafter, embodiments will be described with reference to the drawings. Prior to the description of the embodiments, terms will be described. A pseudo space is a representation of the real world in the real space or a representation of the virtual world in the real space. The pseudo space simulating the real world is a space simulating a real city, town or farming village. It may simulate not only a present but also a past city or the like. For example, it is a space simulating Tokyo in Showa 30s. The pseudo space which is a virtual world expressed in the real space is a space the subject matter of which is a virtual world not existing in reality. It is a space the subject matter of which is a town or a city appearing in a movie, an animation movie, a cartoon, a TV drama, a TV animation or a novel. It includes a creation of a future of a real city or the like. The pseudo space is a scaled-down miniature space. The scale is, for example, 1/87 in conformance with the HO scale of railway models. The scale may be from 1/148 to 1/160 which is of the degree of the N scale of railway models.

In the pseudo space, miniatures (miniature models) of buildings and mobile objects are disposed. These are referred to as components. Miniatures of architectural structures include miniatures of buildings, condominiums, houses, stores, station buildings and the like. Miniatures of architectural structures may include ones simulating architectural installations accompanying architectural structures. For example, they are lights that can be turned on and off and doors that can be opened and closed. Miniatures of mobile objects include miniatures of electric trains, trains, airplanes, automobiles, bicycles, carriages, cow carriages, rickshaws, carts, and animals. Miniatures of mobile objects may include miniatures of living things such as humans and animals. As a miniature of a human, a miniature simulating the user may be created. Moreover, in the pseudo space expressing a virtual world in the real space, miniatures of mobile objects include miniatures of humanoid weapons, space ships and the like.

The miniature facility is a facility where the pseudo space is realized for the visitors to view it. The pseudo space and its viewing place are an exhibition area. When an exhibition area includes two or more pseudo spaces, each pseudo space and its viewing place are called merely area. To distinguish among areas, they may be designated as a first area, a second area and the like.

A use authority is an authority that enables placement of a component under predetermined control in a pseudo space. The use authority is provided to the user in exchange for a predetermined price for a predetermined period or without a period being determined. The user having the use authority is called an owner user or an owner. The use authority may be provided in units of groups consisting of a plurality of users instead of in units of users. The group is, for example, a family.

A room arrangement setting is a room arrangement determined by the user for a miniature of a house such as a condominium or a detached house. According to the room arrangement setting set by the user, a miniature of a house is newly created, updated or re-created and is placed in the pseudo space. In the following, unless otherwise specified, condominiums, detached houses, automobiles and the like indicate miniatures thereof.

### Embodiment 1

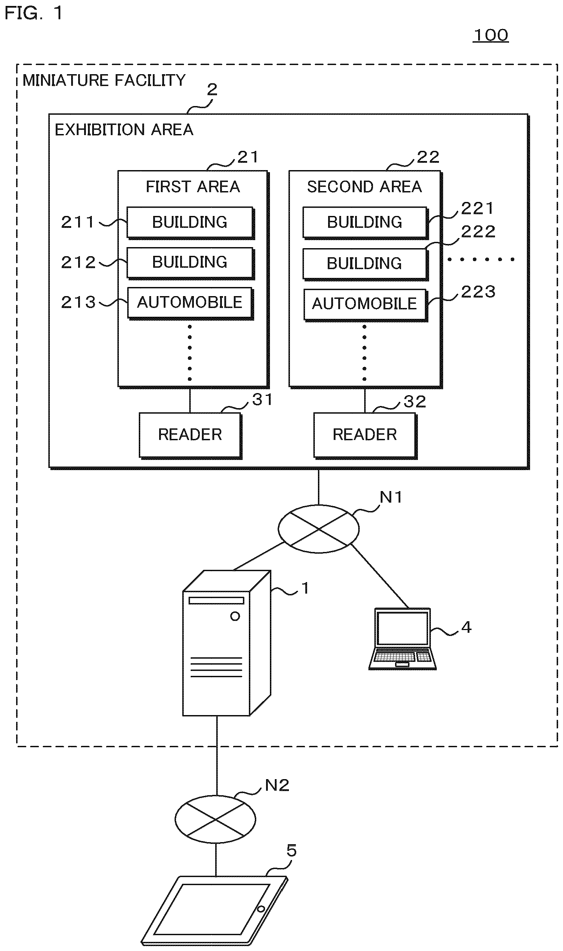

Fig. 1 is an explanatory view showing a structure example of a miniature facility system. A miniature facility system 100 includes a control server (miniature facility control device) 1, an exhibition area 2, a registration terminal 4 and a user terminal 5. The control server 1, the exhibition area 2 and the registration terminal 4 are placed within the miniature facility. The control server 1, the exhibition area 2 and the registration terminal 4 are connected by a network N1 so that they can communicate with one another. The control server 1 and the user terminal 5 are connected by a network N2 so that they can communicate with each other.

The exhibition area 2 includes a plurality of areas (a first area 21, a second area 22, ...) and a reader 31, a reader 32, ... provided for each area. The first area 21 expresses, for example, a pseudo space the subject matter of which is past Tokyo. The second area 22 expresses, for example, a pseudo space the subject matter of which is future Tokyo appearing in an animation. As described above, when the exhibition area 2 includes two or more areas, the areas express pseudo spaces with different themes. While the first area 21 and the second area 22 are shown in the exhibition area 2 in Fig. 1, the number of areas may be one or may be three or more. Two or more exhibition areas 2 may be provided in the miniature facility. Moreover, the control server 1 may be provided in each exhibition area or one control server 1 may be provided for two or more exhibition areas. Further, the control server 1 may be provided in each area. The control server 1 may be placed outside the miniature facility. The function of the control server 1 may be distributed to two or more servers or may be implemented by a cloud service.

The first area 21 includes a building 211, a building 212 and an automobile 213. The second area 22 includes a building 221, a building 222 and an automobile 223. The building 211, the building 212 and the automobile 213 in the first area 21 are examples of the components in the pseudo space. The building 221, the building 222 and the automobile 223 in the second area 22 are examples of the components in the pseudo space. Moreover, the building 211 and the building 212 in the first area 21 and the building 221 and the building 222 in the second area 22 are examples of miniatures of the architectural structures. The automobile 213 in the first area 21 and the automobile 223 in the second area 22 are examples of miniatures of the mobile objects. While two buildings and one automobile are shown in each of the first area 21 and the second area 22 in Fig. 1, the present invention is not limited thereto. As components of areas, buildings are not necessarily included and three or more buildings may be included. Likewise, as components of areas, automobiles are not necessarily included and three or more automobiles may be included. Some of the miniatures of the mobile objects are each provided with a power source and capable of moving in the pseudo space by remote control. While the power source is incorporated in each miniature, the present invention is not limited thereto. The miniatures may be moved by using wire or piano wire. Iron or the like may be incorporated in the miniatures so that they are moved by the magnetic force form a magnet.

On the other hand, while only one registration terminal 4 and one user terminal 5 are shown in Fig. 1, the numbers thereof may be two or more. This is because each user is assumed to have the user terminal 5.

The readers 31 and 32 are, for example, magnetic card readers, or contact or non-contact IC card readers. The readers 31 and 32 store the IDs of the areas where they are placed. The readers 31 and 32 read a user card possessed by the user. The user ID is stored on the user card. The readers 31 and 32 read the user card and obtain the user ID, whereby the user visiting the first area 21 and the second area 22 corresponding to the readers 31 and 32 can be determined. The readers 31 and 32 may be face recognition devices. The readers 31 and 32 take an image of the user's face and compare it with the previously stored feature amount of each user's face to thereby authenticate the user. The user's facial image corresponds to the identification information.

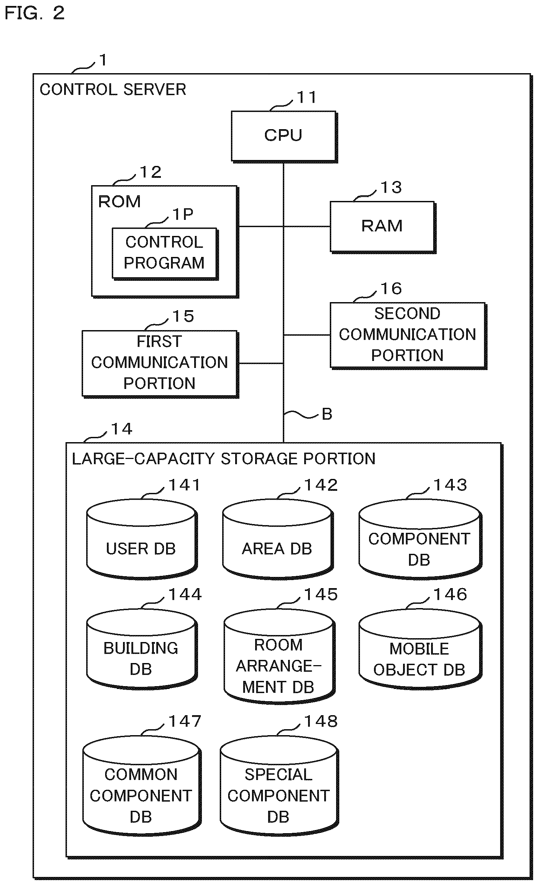

Fig. 2 is a block diagram showing a hardware structure example of the control server 1. The control server 1 controls the exhibition area. It controls architectural installations included in the building and the movement of the automobile. The control server 1 is formed of a server computer or the like. The control server 1 includes a CPU (Central Processing Unit) 11, a ROM (Read Only Memory) 12, a RAM (Random Access Memory) 13, a large-capacity storage portion 14, a first communication portion 15 and a second communication portion 16. These components are connected by a bus B.

The CPU 11 controls each hardware portion according to a control program (miniature facility control program) stored in the ROM 12. The RAM 13 is, for example, an SRAM (Static RAM), a DRAM (Dynamic RAM) or a flash memory. The RAM 13 temporarily stores the data generated when the program is executed by the CPU 11.

The large-capacity storage portion 14 is, for example, a hard disk or an SSD (Solid State Drive). The large-capacity storage portion 14 stores various databases (DBs). The large-capacity storage portion 14 stores a user DB 141, an area DB 142, a component DB 143, a building DB 144, a room arrangement DB 145, a mobile object DB 146, a common component DB 147 and a special component DB 148. Moreover, the control program 1P may be stored in the large-capacity storage portion 14. The user DB 141, the area DB 142, the component DB 143, the building DB 144, the room arrangement DB 145, the mobile object DB 146, the common component DB 147 and the special component DB 148 may be stored on other than the control server 1. For example, they may be stored on a database server or a cloud storage.

The first communication portion 15 performs communication with the exhibition area 2 and the registration terminal 4 through the network N1. Through the first communication portion 15, the CPU 11 may download the control program 1P from another computer through the network N1 or the like and store it in the large-capacity storage portion 14. The second communication portion 16 performs communication with the user terminal 5 through the network N2.

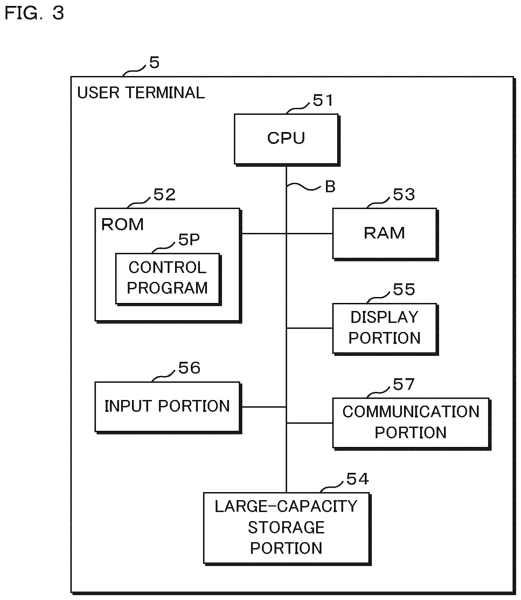

Fig. 3 is a block diagram showing a hardware structure example of the user terminal 5. The user terminal 5 remotely controls components the use authorities of which are possessed.
The user terminal 5 is formed of a tablet computer, a smartphone or the like. The user terminal 5 includes a CPU 51, a ROM 52, a RAM 53, a large-capacity storage portion 54, a display portion 55, an input portion 56 and a communication portion 57. These components are connected by a bus B.

The CPU 51 controls each hardware portion according to a control program (miniature facility remote control program) 5P stored in the ROM 52. The RAM 53 is, for example, an SRAM, a DRAM or a flash memory. The RAM 53 temporarily stores the data generated when the program is executed by the CPU 51.

The large-capacity storage portion 54 is, for example, a hard disk or an SSD. The large-capacity storage portion 54 stores various user data such as the user ID. The display portion 55 is, for example, a liquid crystal display. The display portion 55 displays what is going on in the exhibition area 2 or the like. The input portion 56 is a keyboard or a mouse. Moreover, the display portion 55 and the input portion 56 may be integrated and formed of a touch panel display. The communication portion 57 performs communication with the control server 1 through the network N2.

The structure of the registration terminal 4 is the same as that of the user terminal 5. Therefore, the illustration of the hardware structure of the registration terminal 4 and description of the structure are omitted.

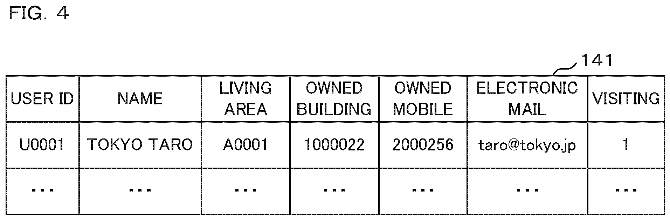

Next, the contents of the databases will be described. Fig. 4 is an explanatory view showing an example of the user DB. The user DB 141 stores information related to each user. The user DB 141 includes a user ID column, a name column, a living area column, an owned building column, an owned mobile object column, an electronic mail column and a visiting column. The user ID column stores user IDs (identification information) to uniquely identify the users. The name column stores the users' names. The living area column stores the area IDs of the living areas in the pseudo space at the miniature facility. The owned building column stores the component IDs to identify the buildings the use authorities of which are possessed by the users. The owned mobile object column stores the component IDs to identify the mobile objects the use authorities of which are possessed by the users. The electronic mail column stores the users' electronic mail addresses. The visiting column stores the flags representative of the users' visiting states. For example, when a user visits and stays in the area, the visiting column stores 1. When the user does not visit or when the user visited but has already exited, the visiting column stores 0. In order to appropriately grasp the users' entrance and exit, an entrance only gate and an exit only gate are provided for each area, and a reader is placed at each gate. The users have their user cards read at the time of entrance and at the time of exit. The reader transmits the user ID, the area ID and the distinction between the entrance gate and the exit gate to the control server 1. When user authentication is performed with the users' facial images, facial images and facial feature amounts may be stored in the user DB 141. After face authentication succeeds, the processing may be proceeded with the user's identification information being changed from the facial image to the user ID. A paper receipt or the like where a two-dimensional code to which the user ID is converted is printed may be issued at the entrance only gate of the area that the user enters first; in this case, when passing a gate thereafter, the user has the two-dimensional code optically scanned by the reader to enter or exit from the area.

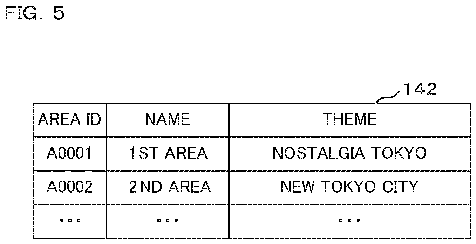

Fig. 5 is an explanatory view showing an example of the area DB. The area DB 142 stores information related to each area. The area DB 142 includes an area ID column, a name column, and a theme column. The area ID column stores area IDs (space IDs) to uniquely identify the areas. The name column stores the names of the areas. The theme column stores the contents of the theme that the pseudo space in the area expresses. It may be performed to integrate the name column and the theme column and set the contents of the theme as the name of the area.

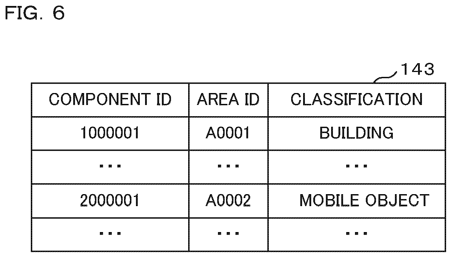

Fig. 6 is an explanatory view showing an example of the component DB. The component DB 143 stores information related to each component. The component DB 143 includes a component ID column, an area ID column, and a classification column. The component ID column stores the component IDs to uniquely identify the components. The area ID column stores the area IDs of the areas where the components are disposed. The classification column stores the classifications of the components. The classifications of the components are, for example, building and mobile object.

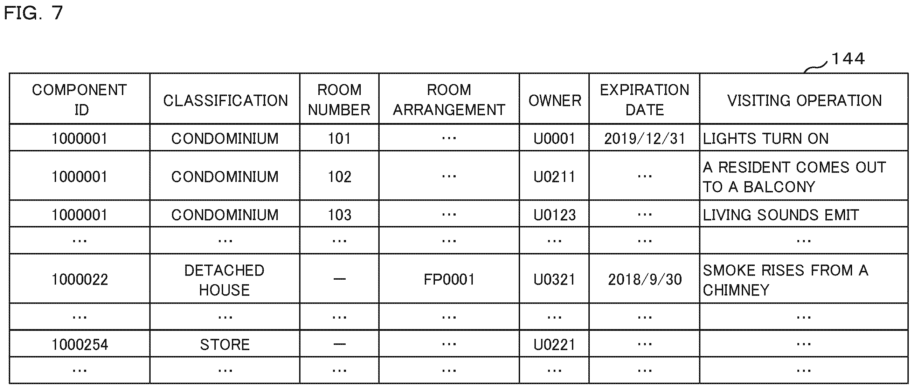

Fig. 7 is an explanatory view showing an example of the building DB. The building DB 144 stores information related to the buildings among the components. The buildings referred to here are buildings mainly used as houses. The building DB 144 includes a component ID column, a classification column, a room number column, a room arrangement column, an owner column, an expiration date column, and a visiting operation column. The component ID column stores the component IDs. The classification column stores the classifications of the buildings. The classifications of the buildings are, for example, condominium, detached house and store. The room number column stores the room numbers of condominiums. The room arrangement column stores the room arrangement IDs to identify the information on the room arrangements of the buildings. The owner column stores the user IDs of the owners of the buildings. The expiration date column stores the expiration dates of the use authorities. The visiting operation column stores the operations when the owners visit. As examples of the operations, a light is turned on so that a family enjoying one another's company can be visually recognized, the owner as a resident comes out to a balcony, and smoke starts to rise from a chimney to provide a sign of living. The operations are not limited to visual ones but living sounds may be emitted from a speaker attached to the building. It may be performed to record the owner's family's conversation and emit it. The building DB 144 may store information such as the number of stories such as two stories or ten stories and information on the structures of the buildings such as wooden structure or concrete structure. The contents of the visiting operation column may be settable by the owners.

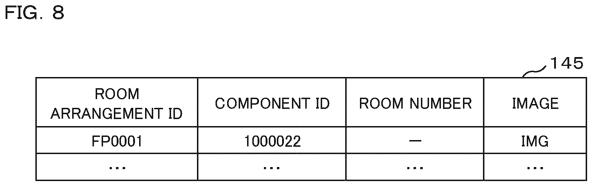

Fig. 8 is an explanatory view showing an example of the room arrangement DB. The room arrangement DB 145 stores information related to the room arrangements of the buildings. The room arrangement DB 145 includes a room arrangement ID column, a component ID column, a room number column, and an image column. The room arrangement ID column stores the room arrangement IDs to uniquely identify information on the room arrangements. The component ID column stores the component IDs of the buildings corresponding to the room arrangements. The room number column stores the room numbers of the buildings corresponding to the room arrangements when the buildings are condominiums. The image column stores images of the room plans showing room arrangements. Information other than room plans may be stored in the room arrangement DB 145. Information showing a room arrangement such as 3 LDK or 1 DK or the total floor area such as 70 square meters or 41 tsubo may be stored. Further, information on interior decorations and installations (may include furniture) may be stored in the room arrangement DB 145. Regarding the interior decorations and installations, it may be performed to take pictures thereof, for example, when a miniature of a building is created and store the taken images. Regarding the installations, the arrangement may be referred to on the room plan.

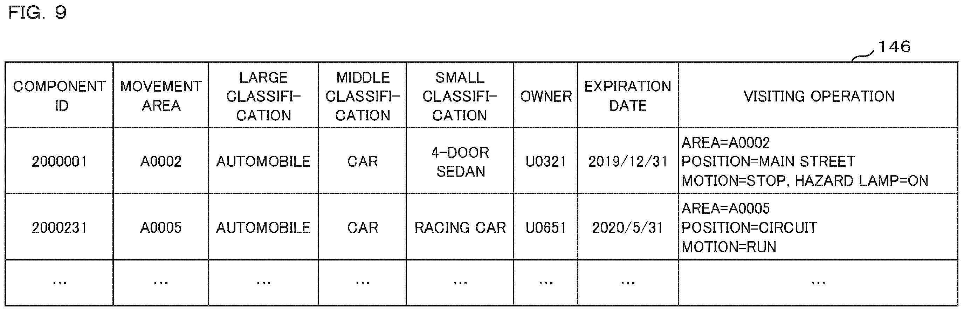

Fig. 9 is an explanatory view showing an example of the mobile object DB. The mobile object DB 146 stores information related to the mobile objects among the components. The mobile object DB 146 includes a component ID column, a movement area column, a large classification column, a middle classification column, a small classification column, an owner column, an expiration date column, and a visiting operation column. The component ID column stores the component IDs. The movement area column stores the area IDs of the areas where the mobile objects are movable. When a mobile object is movable in a plurality of areas, the movement area column stores a plurality of area IDs. The large classification column, the middle classification column, and the small classification column store the large classification, the middle classification, and the small classification of the mobile objects. The large classification is, for example, an automobile, a flying object, and others. The middle classification of the automobile is, for example, car, bus, truck, and special automobile. The middle classification of the flying object is, for example, airplane and space rocket. The small classification of the automobile is, for example, coupe, sedan, and hatchback. As shown in Fig. 9, the small classification may be an expression including the number of doors. The owner column stores the user IDs of the owners of the moving objects. The expiration date column stores the expiration dates of the use authorities. The visiting operation column stores the operations when the owners visit. Examples of the operations include operations such that an automobile appears from a garage and is stopped with the hazard lamps on the main street of an area and that a racing car is made to run around a circuit. When the middle classification is car, the mobile object DB 146 may store the colors of the bodies of the cars. The contents of the visiting operation column may be made settable by the owners.

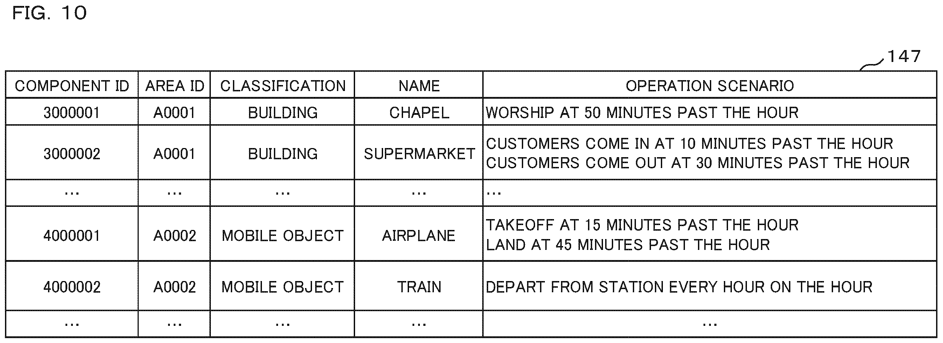

Fig. 10 is an explanatory view showing an example of the common component DB. The common component DB 147 stores data related to the components the use authorities of which are provided to no users (referred to as common components). The common component DB 147 includes a component ID column, an area ID column, a classification column, a name column, and an operation scenario column. The component ID column stores the component IDs by which the common components can be uniquely identified. The area ID column stores the area IDs of the areas where the common components are disposed. The classification column stores the classifications of the common components (building, mobile object, etc.). The name column stores the names of the common components. The operation scenario column stores the contents of operations of the common components.

The common components offer a sense of realism of each area by performing a predetermined operation according to an operation scenario. For example, in a chapel, a priest periodically appears to express a service being performed. In the case of a supermarket, it is expressed that customers come and after a while, customers having finished shopping leave. In the case of an airplane, it is expressed that the airplane takes off and lands. In the case of a train, it is expressed that the train departs from a station and arrives at a station. While the execution times are fixed in the example of the scenario shown in Fig. 10, the present invention is not limited thereto. The scenario may be executed at random. Moreover, it may be performed to introduce a flow of time in the area and change the operation scenario of the common components among the periods of time. The flow of time may be made faster than normal so that changes of one day are expressed in three hours. However, it is desirable that the speeds of the mobile objects be independent of the flow of time and be speeds that offer a sense of realism.

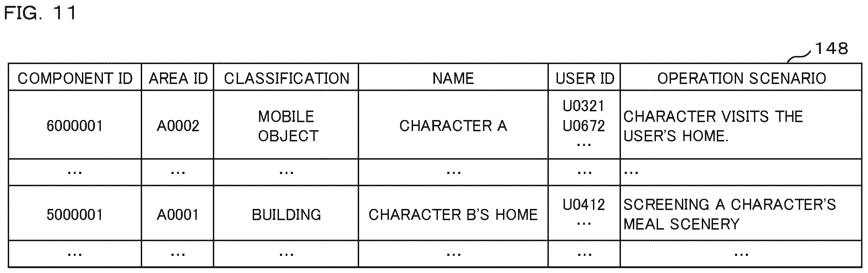

Fig. 11 is an explanatory view showing an example of the special component DB. The special component DB 148 stores data related to special components that differ according to the area (referred to as special components). The special components are components that have special significance for the user for which components the user have strong feelings and feel a sense of affinity. For example, when the theme is Tokyo in Showa 30s, the special components are popular athletes or movie stars of that time. The special components may be buildings or the like at sightseeing spots that were popular in those days. When the theme is the world in an animation movie, the special components are characters appearing in the movie, cars or humanoid weapons used by the characters, the characters' house, the buildings where the characters are at work or the like. The special component DB 148 includes a component ID column, an area ID column, a classification column, a name column, a user ID column, and an operation scenario column. The component ID column stores the component IDs by which the special components can be uniquely identified. The area ID column stores the area IDs of the areas where the special components are disposed. The classification column stores the classifications of the special components (building, mobile object, etc.). The name column stores the names of the special components. The user ID column stores the user IDs of the users capable of causing the operations of the special components to be performed. For example, when a user stored in the user ID column visits, a special component operates. The operation scenario column stores the contents of operations of the special components. Examples of the operations include a showing of scenes where a character visits the visiting user's home and the character is having a meal at home. Details of the flow from the visiting of the user to the operation of the special component will be described in a fourth embodiment.

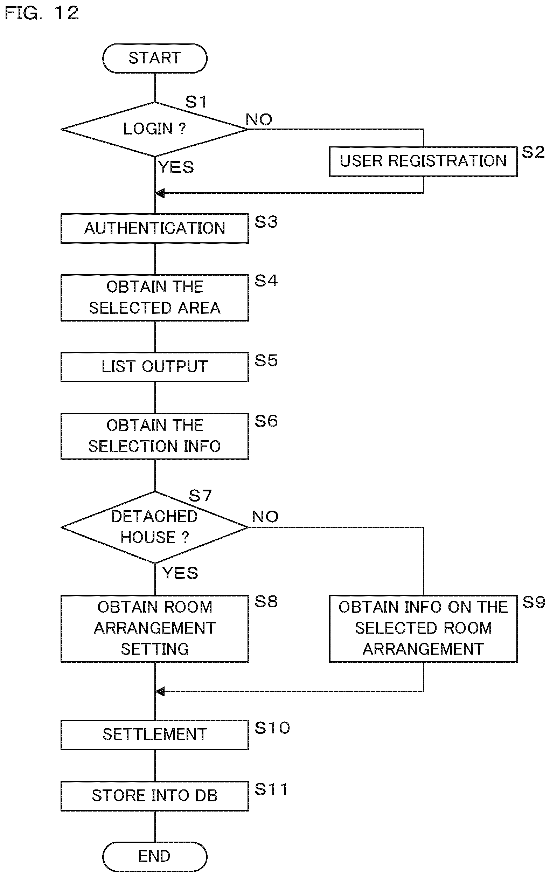

Subsequently, the processing performed by the control server 1 will be described. Fig. 12 is a flowchart showing a procedure example of building use authority purchase processing. The purchase processing is processing when a user purchases the use authority of a building. The user accesses the control server 1 from the registration terminal 4 or the user terminal 5. Hereinafter, it is assumed that the user accesses the control server 1 from the registration terminal 4. The control server 1 outputs a login screen. The login screen includes a button for transition to a registration screen for unregistered users to perform registration. A registered user inputs a user ID and a password. The registration terminal 4 transmits the user ID and the password to the control server 1. An unregistered user selects the button for transition to the registration screen. The registration terminal 4 transmits this to the control server 1. The CPU 11 of the control server 1 determines whether it is a login request or not (step S1). When determining that it is a login request (YES at step S1), the CPU 11 performs authentication (step S3). When determining that it is not a login request (NO at step S1), the CPU 11 performs user registration processing (step S2). Description of the user registration processing which can be constructed by a known technology is omitted. After the user registration, the CPU 11 performs authentication (step S3). The user selects the area corresponding to the component the use authority of which the user purchases. The CPU 11 obtains information on the area selected by the user (step S4). The CPU 11 obtains information on the buildings in the selected area from the building DB 144, and outputs it in the form of a list (step S5). The user selects, from the list, the building the use authority of which the user wants to purchase. The CPU 11 obtains the selection information (step S6). The CPU 11 determines whether the selected building is a detached house or not (step S7). When determining that the selected building is a detached house (YES at step S7), the CPU 11 obtains the room arrangement setting (step S8). For example, the CPU 11 obtains the room plan entered by the user from the registration terminal 4. When determining that the selected building is not a detached house (NO at step S7), the CPU 11 obtains information on the selected room arrangement (step S9). When the building is not a detached house, since the user cannot freely set the room arrangement, the user selects one from among a plurality of preset room arrangements. The CPU 11 calculates the price of the use authority according to the building and the room arrangement and make settlement (step S10). The CPU 11 stores the user ID that purchased the use authority in the owner column of the building DB 144 and the expiration date in the expiration date column thereof (step S11). The period is, for example, one year from the settlement day. The period may be specifiable so that the user specifies it. The CPU 11 ends the building purchase processing. Illustration and description of the processing performed by the CPU 11 when a user purchases the use authority of a mobile object are omitted because they are similar to those of the processing shown in Fig. 12.

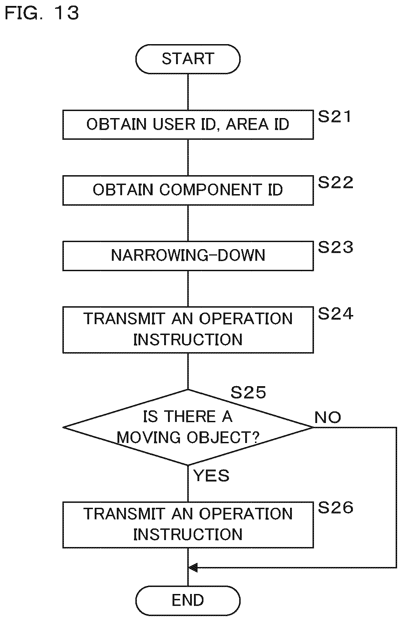

Fig. 13 is a flowchart showing a procedure example of visiting operation processing. The visiting operation processing is processing to operate the component the use authority of which is possessed by an owner when the owner visits the miniature facility. When visiting, the owner has his/her user card read by one of the readers 31 and 32 placed in each area. The reader 31 or 32 transmits the read user ID and the area ID to the control server 1. The CPU 11 of the control server 1 obtains the user ID and the area ID (step S21). The CPU 11 searches the building DB 144 and the mobile object DB 146 with the user ID as the search key and obtains the components ID of the buildings and the mobile objects the use authorities of which are possessed by the user (step S22). The CPU 11 performs narrowing-down of the components (step S23). Referring to the area ID column of the record of the component DB 143 corresponding to the obtained component IDs, the CPU 11 deletes the component ID not coinciding with the area ID obtained at step S21. When the component is a mobile object, the CPU 11 deletes the component ID where the area ID column of the record of the component DB 143 does not coincide with the obtained area ID and the obtained area ID is not included in the movement area column of the mobile object DB 146. Regarding the components of the buildings that are left as a result of the narrowing-down, the CPU 11 reads the contents of the visiting operation column of the building DB 144 and transmits an operation instruction (step S24). According to the operation instruction, for example, a light of the owner's building is turned on and smoke from a fireplace is rising from a chimney. The CPU 11 further determines whether the component ID of a mobile object is present among the component IDs left as a result of narrowing-down or not (step S25). When determining that the component ID of a mobile object is present (YES at step S25), the CPU 11 reads the contents of the visiting operation column of the mobile object DB 146 and transmits an operation instruction (step S26). According to the operation instruction, for example, the owner's automobile appears from a garage and is stopped with the hazard lamps on on the main street of the town. The CPU 11 ends the visiting operation processing. When determining that the component ID of a mobile object is absent (NO at step S25), the CPU 11 ends the visiting operation processing.

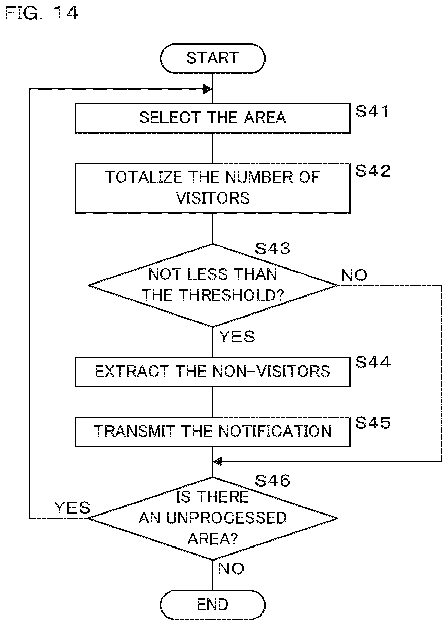

Fig. 14 is a flowchart showing a procedure example of visiting prompting processing. The visiting prompting processing is processing to prompt users not visiting to visit. Specifically, regarding an area having a large number of visitors and being lively, the users not visiting are notified that the area is lively to prompt them to visit it. Referring to the area DB 142, the CPU 11 of the control server 1 selects the area to be made the target of the processing (step S41). The CPU 11 totalizes the number of visitors of the selected area (step S42). The CPU 11 searches the user DB 141 and totalizes the number of records where the value of the living area column coincides with the area ID of the selected area and the value of the vising column is 1. The CPU 11 determines whether the total value is not less than a predetermined threshold value or not (step S43). When determining that the total value is less than the predetermined threshold value (NO at step S43), the CPU 11 shifts the process to step S46. When determining that the total value is not less than the predetermined threshold value (YES at step S43), the CPU 11 extracts the non-visitors of the selected area (step S44). The CPU 11 searches the user DB 141 and extracts the record where the value of the living area column coincides with the area ID of the selected area and the value of the vising column is 0. The CPU 11 transmits, to the extracted users, a notification to prompt visiting (step S45). Specifically, the CPU 11 sends electronic mails to the users stored in the electronic mail column. The CPU 11 determines whether an unprocessed area is present or not (step S46). When determining that an unprocessed area is present (YES at step S46), the CPU 11 returns the process to step S41 and performs processing for the unprocessed area. When determining that no unprocessed area is present (NO at step S46), the CPU 11 ends the visiting prompting processing. The CPU 11 repetitively performs the visiting prompting processing during the operation hours of the miniature facility.

The present embodiment produces the following effects: By the visiting operation processing, a miniature associated with a visiting user, that is, a miniature the use authority of which is possessed by the user can be operated. This allows the user to feel that the pseudo space offered by the miniature facility is more real and more familiar. By the visiting of users having received the notification by the visiting prompting processing, the pseudo space becomes more lively, so that the users can enjoy the miniature facility more. Consequently, it is expected that the frequency of users' visiting increases.

### Embodiment 2

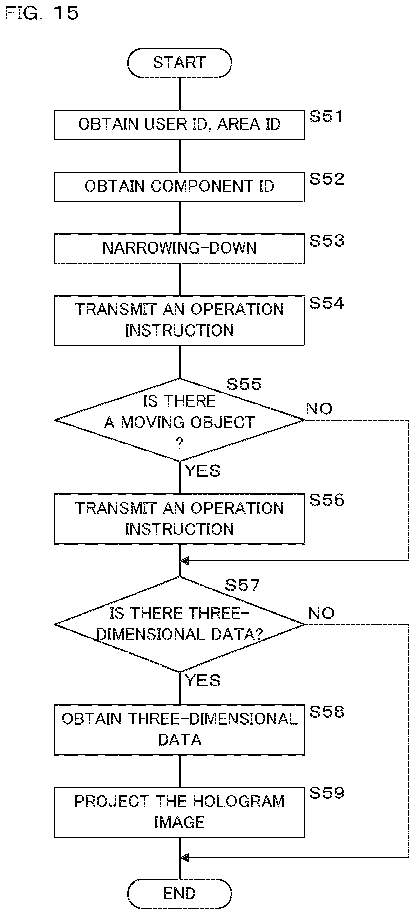

The present embodiment is provided with the function of projecting users' images in the pseudo space. The system configuration is similar to that of Embodiment 1. In the following description, differences from Embodiment 1 will be mainly described. In the present embodiment, the user DB 141 stores users' three-dimensional shapes (three-dimensional data). Fig. 15 is a flowchart showing another procedure example of the visiting operation processing. In Fig. 15, description of steps S51 to S56 which are similar to steps S21 to S26 of Fig. 13 is omitted. After step S25, the CPU 11 of the control server 1 determines whether a user's three-dimensional data is present or not (step S57). When determining that the user's three-dimensional data is present (YES at step S57), the CPU 11 obtains the three-dimensional data (step S58). The CPU 11 projects the user's hologram image based on the obtained three-dimensional data (step S59). The CPU 11 ends the visiting operation processing. When determining that the user's three-dimensional data is absent (NO at step S57), the CPU 11 end the visiting operation processing.

Users' three-dimensional data are previously obtained by a three-dimensional scanner such as a laser rangefinder. In which positions the users' hologram images are placed is previously determined.

The present embodiment produces the following effects in addition to the effects of Embodiment 1: By projecting a user's hologram image in the pseudo space, the user's sense of immersion can be increased.

### Embodiment 3

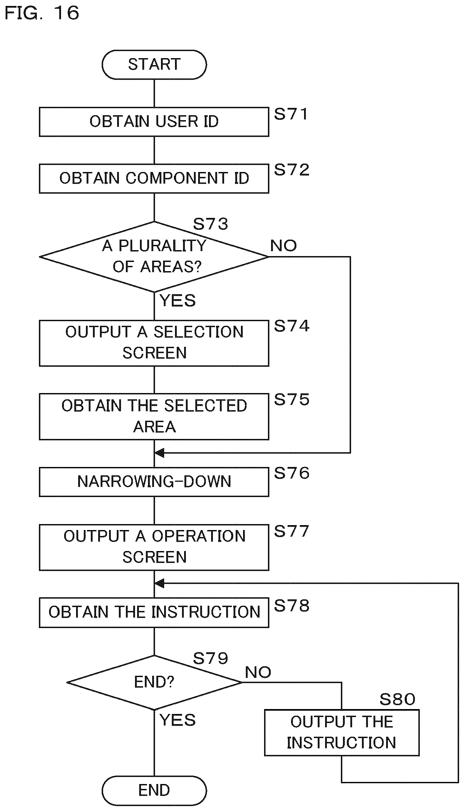

The present embodiment provides a function for users who are not visiting. The system configuration is similar to that of Embodiment 1. In the following description, differences from Embodiment 1 will be mainly described. In the present embodiment, the users can remotely operate the components the use authorities of which are possessed by the users. Fig. 16 is a flowchart showing a procedure example of remote operation processing. While the remote operation processing is processing performed by the control server 1 and the user terminal 5 in cooperation with each other, Fig. 16 shows the processing of the control server 1. A user logs in to the control server 1 by using the user terminal 5. The CPU 11 of the control server 1 obtains the user ID of the user who logged in (step S71). The CPU 11 obtains the component IDs of the components the use authorities of which are possessed by the user (step S72). Specifically, the CPU 11 searches the building DB 144 and the mobile object DB 146 with the user ID as the search key, and obtains the value of the component ID column of the record where the value of the owner column coincides with the user ID. The CPU 11 determines whether the components the use authorities of which are possessed by the user are distributed in a plurality of areas or not. Specifically, regarding the building, the CPU 11 searches the component DB 143 and obtains the area ID of the area where the building is disposed. Regarding the mobile object, the CPU 11 searches the component DB 143 and obtains the area ID of the area where the mobile object is disposed. Moreover, referring to the mobile object DB 146, the CPU obtains the area IDs of the areas where movement is allowed. The CPU 11 deletes the overlapping ones of all the obtained area IDs. Then, the CPU 11 determines whether the number of remaining area IDs is more than one or not. When determining that the number of areas is not more than one (NO at step S73), the CPU 11 shifts the process to step S76. When determining that the number of areas is more than one (YES at step S73), the CPU 11 outputs a selection screen for area selection to the user terminal 5 (step S74). The user selects an area that the user wants to operate by using the input portion 56, from among a plurality of areas displayed on the display portion 55 of the user terminal 5. The user terminal 5 transmits the area ID of the selected area to the control server 1. The control server 1 obtains the area ID of the selected area (step S75). The CPU 11 performs narrowing-down to the component corresponding to the selected area ID (step S76). The CPU 11 generates an operation screen to operate the narrowed-down component, and outputs the operation screen (step S77). The user selects an instruction to operate, by using the input portion 56, the component that the user wants to operate on the operation screen displayed on the display portion 55 of the user terminal 5. The user terminal 5 transmits the selected instruction to the control server 1. The CPU 11 obtains the instruction (step S78). The CPU 11 determines whether the obtained instruction is to end or not (step S79). When determining that the obtained instruction is not to end (NO at step S79), the CPU 11 outputs the instruction to the exhibition area 2 (step S80), and operates the component. The CPU 11 returns the process to step S78. When determining that the obtained instruction is to end (YES at step S79), the CPU 11 ends the remote operation processing.

In each area of the exhibition area 2, a multiplicity of cameras are disposed. Images taken by the cameras are transmitted to the user terminal 5. The user can confirm the operation of the remotely controlled component.

According to the present embodiment, even users not visiting the miniature facility can enjoy the pseudo space.

### Embodiment 4

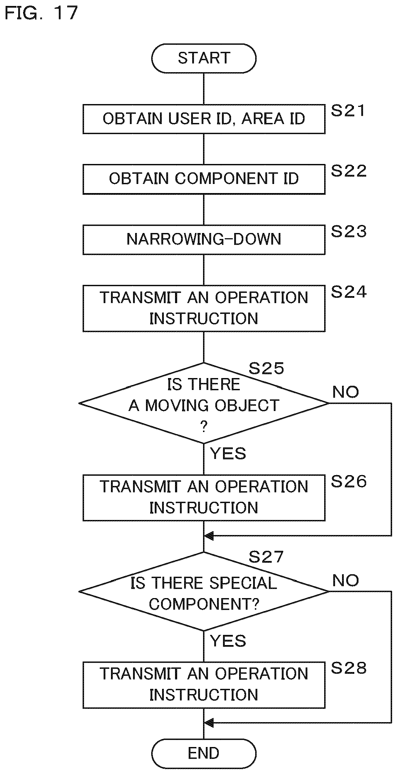

The present embodiment is a mode in which a special component operates when a user visits. The system configuration is similar to that of the first embodiment. In the following description, differences from Embodiment 1 will be mainly described. Fig. 17 is a flowchart showing another procedure example of the visiting operation processing. In Fig. 17, description of steps S21 to S26 which are similar to steps S21 to S26 of Fig. 13 is omitted. After step S25 or step S26, the CPU 11 searches the special component DB 148. The CPU 11 determines whether a special component including the user ID and the area ID column obtained at step S21 is present in the user ID column and the area ID column or not (step S27). When determining that a special component including the user ID and the area ID column is present (YES at step S27), the CPU 11 reads the contents of the operation scenario of the special component DB 148, and transmits an operation instruction according to the operation scenario (step S28). The CPU 11 ends the visiting operation processing. When determining that no special component including the user ID and the area ID column is present (NO at step S27), the CPU 11 ends the visiting operation processing.

In the present invention, the following effects are produced in addition to the effects produced by Embodiment 1: In addition to the miniatures associated with the visiting users, special components can be operated. Thereby, it is possible to make the users feel that visiting the miniature facility is highly worthwhile.

To operate a special component, it is necessary to store the user ID in the special component DB 148. The processing therefor can be implemented by processing similar to the building use authority purchase processing shown in Fig. 12.

While the operation when a user visits is described in the above, the component may be operated also when the user leaves. For example, operations are performed such that a light of a building is turned off and that an automobile is returned to the garage.

### Embodiment 5

The present embodiment relates to a mode in which an area is divided into a plurality of sections, the use authority is sold for each section and a pseudo space is created. In the area, pseudo spaces corresponding to regions that differ among sections are created. Each section is a pseudo space to offer information on a region. In each section, the process in which specialty goods or a noted product of the corresponding region is produced and the producer's fastidiousness are expressed with miniatures. Moreover, in each section, the culture of the region is expressed with miniatures. By such information dispatch, the eagerness to purchase the specialty goods and the noted product of the user visiting the area is increased.

Hereinafter, the areas of the present embodiment will be called product sales areas. Users having the use authorities of sections will be called section owners. Users of the miniature facility who visit the product sales areas will be called end users. As the collective term of the specialty goods and the noted product, product will be used.

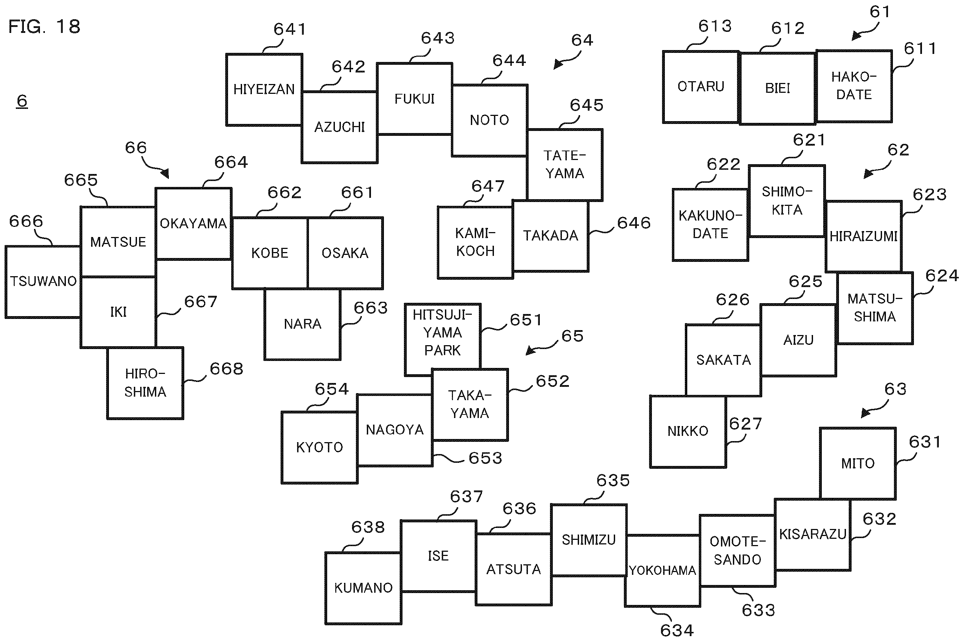

Fig. 18 is a plan view showing an example of the product sales area. In the example shown in Fig. 18, sections corresponding to a plurality of regions of Japan are provided in a product sales area 6. As shown in Fig. 18, the sections may be disposed according to the geographical positions of the regions corresponding to the sections. It is not necessary that the sizes of the regions corresponding to the sections be uniform. For example, like a section 651, a park may take one section. Moreover, a shopping street may take one section. Moreover, a plurality of sections may be grouped. In the example shown in Fig. 18, six groups of a first group 61 to a sixth group 66 are provided. The sections included in each group are disposed so as to adjoin each other. By providing space among the groups, the end users can look around the sections.

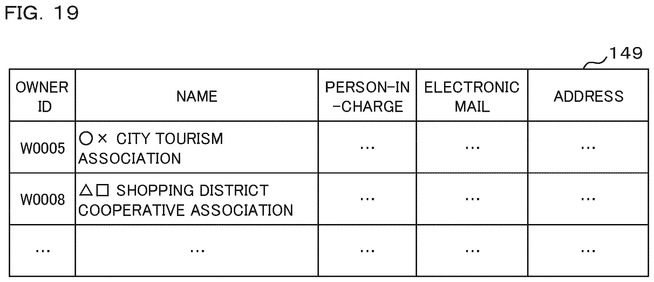

Next, the databases used in the present embodiment will be described. Fig. 19 is an explanatory view showing an example of a section owner DB. The section owner DB 149 stores information on the section owners. The section owner DB 149 includes an owner ID column, a name column, a person-in-charge column, an electronic mail column, and an address column. The owner ID column stores the IDs by which the section owners can be uniquely identified. The name column stores the section owners' names. It is assumed that the section owners are associations. The person-in-charge column stores the names of the persons in charge in the section owners.
The electronic mail column stores the section owners' contact electronic mail addresses. The address column stores the section owners' current addresses.

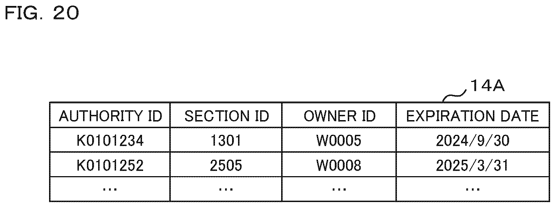

Fig. 20 is an explanatory view showing an example of an authority DB. The authority DB 14A stores the association between the sections and the section owners. The authority DB 14A includes an authority ID column, a section ID column, an owner ID column, and an expiration date column. The authority ID column stores the IDs by which the authorities can be uniquely identified. The section ID column stores the IDs by which the sections can be uniquely identified. The owner ID column stores the section owners' owner IDs. The expiration date column stores the expiration dates of the authorities.

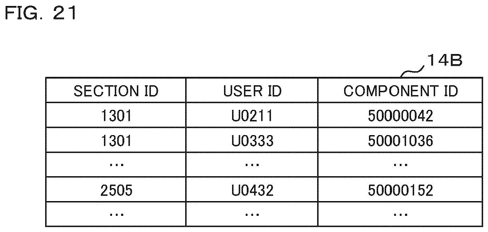

Fig. 21 is an explanatory view showing an example of a resident DB. The resident DB 14B stores information on the residents of the sections. The resident DB 14B includes a section ID column, a user ID column, and a component ID column. The section ID column stores the section IDs. The user ID column stores the user IDS of the end users who have become residents. The component ID column stores the component IDs of the components provided to the users who have become residents. The components are, for example, figure dolls.

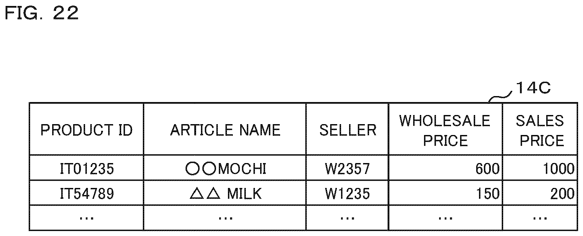

Fig. 22 is an explanatory view showing an example of a product DB. The product DB 14C stores information on the products. The products are the specialty goods and the note products the information of which is dispatched at the sections. The product DB 14C includes a product ID column, an article name column, a seller column, a wholesale price column, and a sales price column. The product ID column stores the IDs by which the products can be uniquely identified. The article name column stores the names of the products. The products referred to here are specialty goods and noted products whose information is dispatched at the sections. Moreover, it is assumed that the products are sold in the miniature facility. The seller column stores the product sellers' IDs, for example, the owner IDs. The wholesale price stores the wholesale prices of the products. The sales price column stores the sales prices of the products. The product DB 14C may stores the JAN (Japanese Article Number) codes assigned to the products.

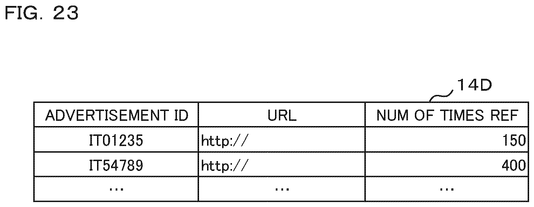

Fig. 23 is an explanatory view showing an example of an advertisement DB. The advertisement DB stores links to advertisements. The advertisements are mainly advertisements for the products. The advertisements may be advertisements or guides for the sections. The advertisement DB 14D includes an advertisement ID column, a URL column, and a num of times ref column. The advertisement ID column stores the IDs by which the advertisements can be uniquely identified. In the case of the advertisements of the products, it may store the product IDs. The URL column stores the URLs (Uniform Resource Locators) of the advertisements. The num of times ref column stores the number of times reference of the advertisements.

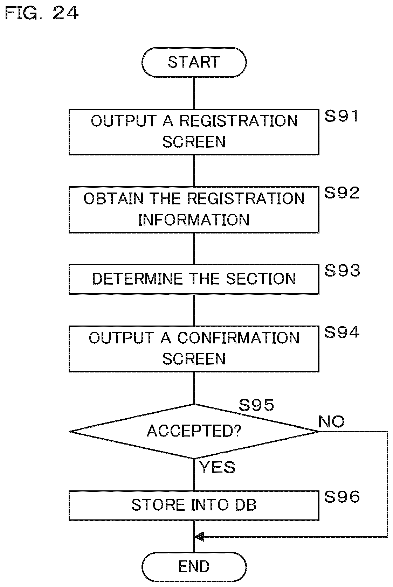

Then, the processing related to the present embodiment will be described. Fig. 24 is a flowchart showing a procedure example of section owner registration processing. The section owner registration processing is started by an access from an applicant. The CPU 11 of the control server 1 outputs a registration screen on the applicant's terminal (step S91). The applicant inputs registration information such as the name and the location address to the registration screen, and transmits it to the control server 1. The CPU 11 of the control server 1 obtains the registration information (step S92). The CPU 11 determines the section assigned to the applicant (step S93). In the section example shown in Fig. 18, sections are disposed according to the geographical positions. In this case, the section is determined according to the applicant's location address. When the applicant's location is Hokkaido, a section in the first group 61 is assigned. The CPU 11 outputs a confirmation screen to confirm the determined section to the applicant terminal (step S94). The applicant confirms the section on the displayed confirmation screen. The applicant inputs a reply as to whether to accept the determined section or not and transmits it to the control server 1. The CPU 11 of the control server 1 determines whether the applicant's reply is acceptance or not (step S95). When determining that the applicant's reply is not acceptance (NO at step S95), the CPU 11 ends the processing. When determining that the applicant's reply is acceptance (YES at step S95), the CPU 11 stores the registration information into the section owner DB 149 and ends the processing. When the applicant is not assigned with an owner ID, the CPU 11 issues a new owner ID. The operator of the miniature facility and the section owner consult with each other and create a pseudo space in the section.

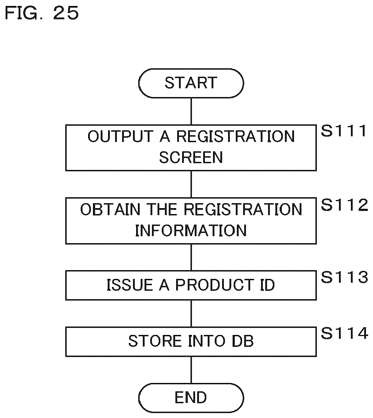

Fig. 25 is a flowchart showing a procedure example of product registration processing. The product registration processing is started by an access from the section owner or the like. The CPU 11 of the control server 1 outputs a registration screen to the section owner's terminal (hereinafter, referred to as owner terminal) (step Sill). The section owner inputs registration information such as the article name, the wholesale price and the like of the product to the registration screen and transmits it to the control server 1. The CPU 11 of the control server 1 obtains the registration information (step S112). The CPU 11 issues a product ID (step S113). The CPU 11 stores the registration information into the product DB 14C in association with the product ID (step S114) and ends the processing. When the wholesale price and the sales price are not determined at the time of registration, a blank or 0 is stored. The operator of the miniature facility and the supplier of the product (assumed to be the section owner) consult with each other about how the product is introduced in the section. For example, the manufacturing process of the product is exhibited, or an advertising signboard of the product is exhibited in the section. Moreover, the operator of the miniature facility and the supplier sign a sales consignment contract and the like including a plan to buy the product and the like.

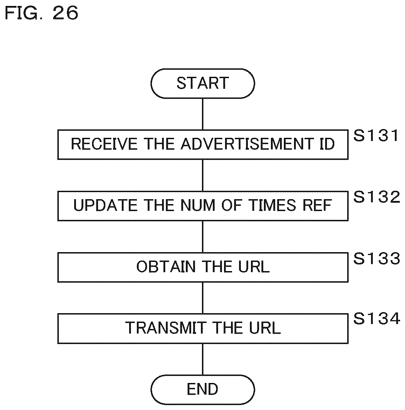

Fig. 26 is a flowchart showing a procedure example of advertisement delivery processing. A two-dimensional code is assigned to an advertising signboard or the like exhibited in the section. The end users can receive the delivery of an advertisement by reading the two-dimensional code with a terminal such as a smartphone. The end users photographs the two-dimensional code with the user terminal 5. The information expressed by the two-dimensional code includes at least an advertisement ID. A URL for accessing the control server 1 may be included. The CPU 51 of the user terminal 5 transmits the advertisement ID obtained from the two-dimensional code to the control server 1. The CPU 11 of the control server 1 receives the advertisement ID (step S131). The CPU 11 of the control server 1 updates the number of times of reference of the advertisement ID stored in the advertisement DB 14D (step S132). The CPU 11 obtains the URL corresponding to the advertisement ID from the advertisement DB 14D (step S133). The CPU 11 transmits the obtained URL to the user terminal 5 (step S134) and ends the processing. The CPU 51 of the user terminal 5 obtains the advertisement by using the obtained URL and displays it.

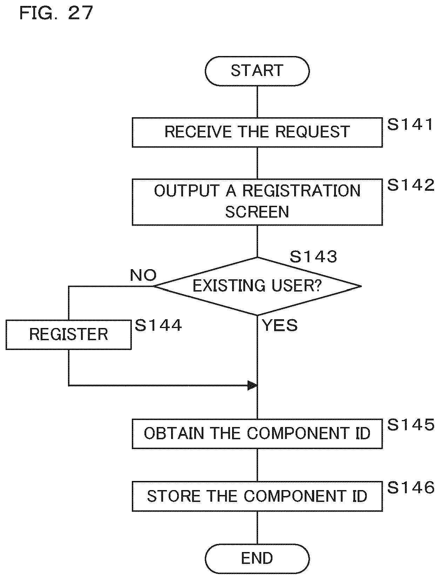

Fig. 27 is a flowchart showing a procedure example of resident registration processing. When the end users purchased products introduced in sections, they can become residents of the sections. For example, when the total amount of the products purchased by an end user exceed a predetermined amount, a guidance to resident registration is provided. According to the guidance, the end user transmits a registration request to the control server 1 by using a terminal in the miniature facility or the user terminal 5. The CPU 11 of the control server 1 receives the request (step S141). The CPU 11 outputs a registration screen for resident registration to the user terminal 5 or the like (step S142). The end user inputs registration information to the registration screen and transmits it to the control server 1. When already registered, the end user inputs the user ID. The user terminal 5 transmits the registration information to the control server 1. The CPU 11 determines whether the end user is an existing user or not based on the received registration information (step S143). When determining the end user is an existing user (YES at step S143), the CPU 11 shifts the process to step S145. When determining that the end user is not an existing user (NO at step S143), the CPU 11 issues a user ID, and registers the registration information into the user DB 141 in association with the user ID (step S144). The CPU 11 obtains the component ID (step S145). The component ID is an ID to identify a figure doll provided to the end user having become a resident. When previously assigned to the figure doll, the ID is read from the figure doll. When no ID is previously assigned, a component ID is issued and assigned to the figure doll. The CPU 11 stores the component ID in association with the user ID (step S146) and ends the processing. The user is handed an uncolored figure doll. The end user can color the figure doll and dispose it in the section. Moreover, the end user may bring it back home without coloring it or after coloring it.

In the present embodiment, the end user's eagerness to purchase the product can be increased. The section owner can recover part of the amount invested to obtain the use authority of the section by the profits from selling the product.

The operator of the miniature facility may offer admission tickets to the section owner. Thereby, the end user's admission to the section can be promoted. Moreover, by selling the admission tickets, the section owner can recover part of the invested amount.

On the other hand, discount coupons by which the admission fee or the like is discounted may be offered to the end users having become residents. It may be performed to organize a festival in the section as in the real world and offer special discount coupons that can be used only on the festival day. By holding the festival on a weekday, motivation to visit the miniature facility on the weekday can be provided to the end users.

### Embodiment 6

The present embodiment relates to a mode in which the component owners can perform resale or the like of the use authorities. Like the real-estate brokerage in the real world, the present embodiment is a mode where the owner who purchased the use authority of a component in a pseudo space from the operator of the miniature facility can provide the use authority to another end user.

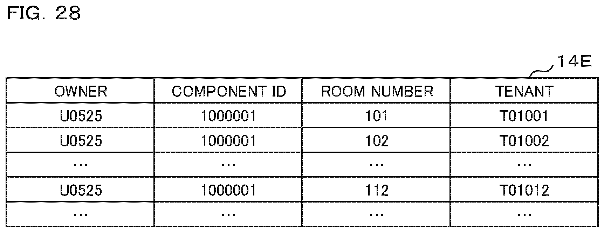

A database newly required in the present embodiment will be described. Fig. 28 is an explanatory view showing an example of a brokerage DB. The brokerage DB 14E stores the association between the owners and the tenants provided with the use authorities from the owners. The brokerage DB 14E includes an owner column, a component ID column, a room number column, and a tenant column. The owner column stores the user ID of the owner who provides the use authority to end users. The component ID column stores the component ID of the component the use authority of which is to be provided. The room number column stores, when the target component is a condominium, the room number the use authority of which is to be provided. When the target component is not a condominium, the column is blank or has no value (NULL). The tenant column stores the user IDs of the end users (tenant users) provided with the use authorities. The user IDs stored in the tenant column are different in number system from those of the end users (normal users) who directly purchased the use authorities. The first letters of the user IDs representative of the tenants are T. On the other hand, the first letters of the user IDs of the normal users are U. While the user IDs of the normal users are issued at the time of user registration, the user IDs of the tenants are issued when a request is made from the owner even if the user who actually uses is not determined.

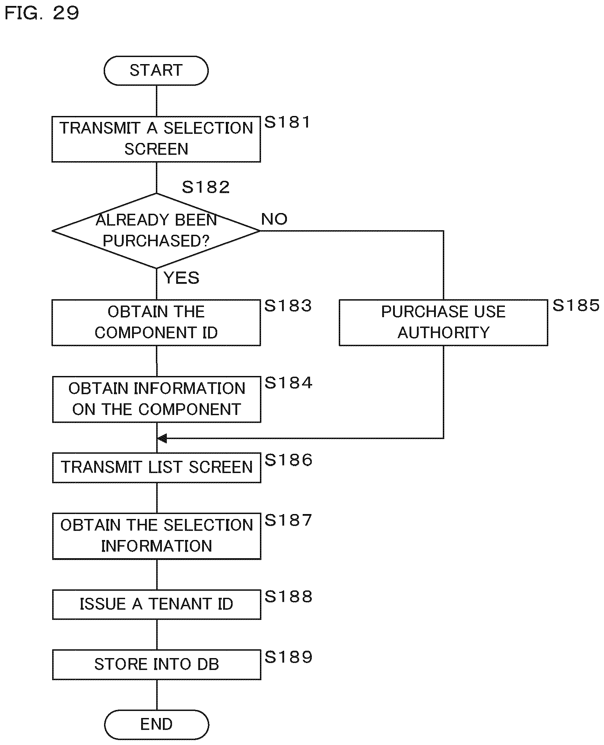

Fig. 29 is a flowchart showing a procedure example of tenant setting processing. The tenant setting processing is started by a request from an owner or a user who intends to become an owner (hereinafter, referred to merely as "owner"). The CPU 11 of the control server 1 transmits a selection screen to the owner's terminal (step S181). The selection screen is a screen to select whether the target is a component the use authority of which has already been purchased or a component the use authority of which has not been purchased yet. The owner selects the target on the selection screen, and transmits it to the control server 1. The CPU 11 of the control server 1 determines whether the target selected by the owner is a component the use authority of which has already been purchased or not (step S182). When determining that the target selected by the owner is not a component the use authority of which has already been purchased (NO at step S182), the CPU 11 of the control server 1 performs the use authority purchase processing (step S185), and shifts the process to step S186. Description of the processing which is similar to steps S4 to S11 shown in Fig. 12 is omitted. When determining that the target selected by the owner is a component the use authority of which has already been purchased (YES at step S182), the CPU 11 of the control server 1 obtains the components ID of the components the use authorities of which are possessed by the owner from the user DB 141 (step S183). The CPU 11 obtains information on the components corresponding to the obtained component IDs from the component DB 143, the building DB 144 and the room arrangement DB 145 (step S184). The CPU 11 generates a component list screen and transmits it to the owner's terminal (step S186). The owner selects the component the use authority of which has been provided to the user, and transmits the selection information to the control server 1. The CPU 11 of the control server 1 obtains the selection information (step S187). The CPU 11 issues a tenant ID corresponding to the selected component (step S188). The CPU 11 stores the owner's user ID, the component ID, the tenant ID and the like into the brokerage DB 14E (step S189) and ends the processing. A user card storing the issued tenant ID as the user ID is offered to the owner. The owner can provide his/her own use authority by providing the user card to an end user. The owner may be notified of the tenant ID and make the user card.

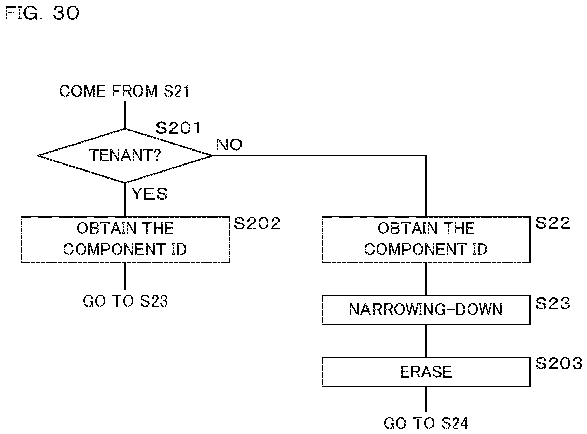

Since part of the vising operation processing is changed because the tenant user is added to the end users, the changed contents will be described. Fig. 30 is a flowchart showing a procedure example of the visiting operation processing. Fig. 30 shows not all the procedure but the changed part of the visiting operation processing. The contents of the changes from the visiting processing shown in Fig. 13 are shown. When visiting, the owner or the tenant user has the user card read by one of the readers 31 and 32 placed in each area. The reader 31 or 32 transmits the read user ID and the area ID to the control server 1. The CPU 11 of the control server 1 obtains the user ID and the component ID (step S21). The CPU 11 determines whether the obtained user ID is the tenant's user ID or not (step S201). When determining that the obtained user ID is the tenant's user ID (YES at step S201), the CPU 11 obtains the component ID from the brokerage DB 14E (step S202). The CPU 11 executes step S23 and succeeding steps of Fig. 13. When determining that the obtained user ID is not the tenant's user ID (YES at step S201), the CPU 11 obtains the component ID (step S202). The CPU 11 performs narrowing-down of the components (step S23). Detailed description of steps S22 and S23 which are similar to the processing of Fig. 13 is omitted. The CPU 11 erases the component ID of the component the use authority of which is provided to the tenant, from the component IDs that are left as a result of the narrowing-down (step S203). The CPU 11 executes steps S24 and succeeding steps of Fig. 13.

In the present embodiment, since the owner can provide the use authorities of the components to others, the owner can use the use authorities as a tool to promote the sales of the products and services that he/she provides. Moreover, the operator of the miniature facility can expect that more use authorities are purchased by allowing the owners to broker the use authorities.

The technical features (components) described in the embodiments may be combined together, and a new technical feature can be formed by combination.

It should be considered that the embodiments disclosed this time are illustrative in all aspects and is not limitative. The scope of the present invention is indicated not by the meaning described above but by the claims, and all changes that fall within the meaning equivalent to the claims and the scope are to be embraced.

### [Description of Reference Numerals]

- 100: miniature facility system
- 1: control server
- 11: CPU
- 12: ROM
- 13: RAM
- 14: large-capacity storage portion
- 141: user DB
- 142: area DB
- 143: component DB
- 144: building DB
- 145: room arrangement DB
- 146: mobile object DB
- 15: first communication portion
- 16: second communication portion
- 1P: control program
- 2: exhibition area
- 31: reader
- 4: registration terminal
- 5: user terminal

## Claims

1. A miniature facility operation method, comprising:
presenting a component of a miniature facility where a pseudo space simulating a real world in a real space or expressing a virtual world in the real space is constructed;
accepting purchase of a use authority of the component;
storing identification information of a user who purchased the use authority and a component ID of the purchased component in a storage portion in association with each other;
when the identification information of the user is read by a reader of the miniature facility, obtaining the component ID associated with the read identification information of the user from the storage portion; and
operating the component assigned with the obtained component ID.

2. The miniature facility operation method according to claim 1
wherein the miniature facility is provided with a plurality of pseudo spaces,
the component is associated with one of the pseudo spaces, and
the storage portion stores the component ID and a space ID of the pseudo space associated with the component in association with each other.

3. The miniature facility operation method according to claim 1 or 2,
wherein the component includes a miniature of a building, and
when the obtained component is the miniature of the building, an architectural installation included in the component is operated.

4. The miniature facility operation method according to claim 3,
wherein the miniature of the building includes a miniature of a house,
a room arrangement setting regarding the miniature of the house is accepted, and
the accepted room arrangement setting is stored.

5. The miniature facility operation method according to claim 4,
wherein the miniature of the house conforming to the room arrangement setting is placed in the pseudo space.

6. The miniature facility operation method according to any one of claims 1 to 5,
wherein the component includes a miniature of a mobile object, and
when the obtained component is the miniature of the mobile object, the mobile object is made to make a predetermined movement.

7. The miniature facility operation method according to any one of claims 1 to 6,
wherein the miniature facility is provided with a plurality of pseudo spaces,
the component is associated with the space ID to identify the pseudo space,
the number of pieces of identification information of the user read by the reader associated with the pseudo space is totalized for each pseudo space, and
when the total value satisfies a predetermined condition, a notification is provided to the user associated with the pseudo space satisfying the condition.

8. The miniature facility operation method according to any one of claims 1 to 7,
wherein the user's image is obtained, and
when the identification information of the user is read by the reader, a hologram based on the read user's image is projected in the pseudo space.

9. A miniature facility control device comprising:
a first obtaining portion that obtains identification information of a user visiting a miniature facility where a pseudo space simulating a real world in a real space or expressing a virtual world in the real space is constructed;
a second obtaining portion that obtains a component ID associated with the obtained identification information of the user, from a storage portion storing the component ID of a component of the miniature facility and the identification information of the user who purchased a use authority of the component in association with each other; and
an output portion that outputs an instruction to operate the component assigned with the obtained component ID.

10. A miniature facility control program causing a computer to perform processing of:
obtaining identification information of a user visiting a miniature facility where a pseudo space simulating a real world in a real space or expressing a virtual world in the real space is constructed;
obtaining a component ID associated with the obtained identification information of the user, from a storage portion storing the component ID of a component of the miniature facility and the identification information of the user who purchased use authority of the component in association with each other; and
outputting an instruction to operate the component assigned with the obtained component ID.

11. A miniature facility remote control program causing a computer to perform processing of:
outputting identification information of a user of a miniature facility where a pseudo space simulating a real world in a real space or expressing a virtual world in the real space is constructed;
obtaining information on a component of the miniature facility a use authority of which is purchased by a user;
accepting an operation instruction for the obtained component; and
outputting the accepted operation instruction.

12. A miniature facility control system comprising:
a reader having: a reading portion that reads identification information of a user visiting a miniature facility where a pseudo space simulating a real world in a real space or expressing a virtual world in the real space is constructed; and a transmission portion that transmits the read identification information of the user; and
a control device having: a receiving portion that receives the identification information of the user transmitted from the reader; an obtaining portion that obtains a component ID associated with the received identification information of the user, from a storage portion storing the component ID of a component of the miniature facility and the identification information on the user who purchased a use authority of the component in associated with each other; and an output portion that outputs an instruction to operate the component assigned with the obtained component ID.

13. A miniature facility operation method according to any one of claims 1 to 8,
wherein purchase of a use authority related to a partial space of the pseudo space is accepted,
based on the purchase of the use authority of the partial space, a component expressing a predetermined region and an advertisement assigned with identification information are placed in the partial space, and
the identification information is a URI where information on a product associated with the region is obtained.

14. A miniature facility construction method, comprising:
in a miniature facility where a pseudo space simulating a real world in a real space or expressing a virtual world in the real space is constructed, accepting purchase of a use authority related to a partial space of the pseudo space; and
placing a component expressing a predetermined region and an advertisement assigned with identification information in the partial space based on the purchase of the use authority;
wherein the identification information is a URI where information on a product associated with the region is obtained.
